(19) Europäisches Patentamt
European Patent Office
Office européen des brevets

(11) **EP 3 018 325 A1**

(12) **EUROPEAN PATENT APPLICATION**

(43) Date of publication:
**11.05.2016 Bulletin 2016/19**

(51) Int Cl.:
*F02D 41/00* (2006.01)    *F02D 41/30* (2006.01)
*F02D 41/14* (2006.01)    *F02D 41/38* (2006.01)

(21) Application number: **14191584.3**

(22) Date of filing: **04.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Delphi Automotive Systems Luxembourg SA**
**4940 Bascharage (LU)**

(72) Inventors:
• **Aggoune, Karim**
  **57100 Thionville (FR)**
• **Robert, Philippe**
  **5377 Sinsin (BE)**

(74) Representative: **Delphi France SAS**
**Patent Department**
**22, avenue des Nations**
**CS 65059 Villepinte**
**95972 Roissy CDG Cedex (FR)**

(54) **IMPROVED METHOD OF CONTROLLING ENGINE DURING SCAVENGING**

(57)    In an engine system, a method of determining the value of the air fuel ratio in an engine cylinder $AFR_{Combustion Chamber}$ when under scavenging conditions comprising;
a) measuring or estimating the engine speed;
b) measuring or estimating the inlet pressure;

c) determining a value for the Air Trapped Ratio based on the results of steps a) and b);
d) determining the air/fuel ratio at a location downstream of the cylinder/in the exhaust (AFRex);
d) determining $AFR_{Combustion Chamber}$ = Air trapped Ratio * AFRex

CYLINDER IN INTAKE PHASE:
INTAKE AND EXHAUST VALVES
FULLY CROSSED

FRESH AIR

WRAF:
FUELING CONTROL IS
MADE AT THAT LOCATION

POST REACTION:
FRESH AIR AND
UNBURNED FUEL

EXHAUST GAS WITH
UNBURNED FUEL

CYLINDER IN EXHAUST PHASE

FIG. 4

**Description**

**Field of the Invention**

This disclosure relates to an improved method in the control of engines under scavenging conditions and has particular application to turbocharged engines.

**Background of the Invention**

A turbocharged direct injection gasoline engine has the capacity to flush out exhaust gas by intake of fresh air during overlapping of the times when both exhaust and intake valves are open during the intake phase. This is known as scavenging and the benefit of this process is a better cylinder air filling and better compressor efficiency due to intake flow increase.

During scavenging there is a split of the intake air between that portion which is trapped in the cylinder, and that directly flushed out to exhaust during the intake phase. Typically Wide Range Air Fuel (WRAF) sensors are located in the exhaust to determine the oxygen and/or air/fuel ratios of the exhaust gases. The output of these sensors are used to control various parameters of the engine.

Where there is no scavenging, the Air Fuel Ratio (AFR) measured at a WRAF sensor is equal to the AFR in the combustion chamber. However this is not the case during scavenging. Until now, the amount of flushed air has not been taken into consideration for the control of the engine to provide optimum conditions or required performance. This leads to torque and fuelling errors. When the amount of fresh flushed air is not considered, the torque estimation is for example wrongly determined (gasoline engine is "air led"). The air fuel ratio (AFR) measured at the sensor location is not equal to the AFR in the combustion chamber. These inconsistencies in the air, fuel and torque generates discontinuities. The excess of oxygen in the exhaust is not registered in the Engine Control Unit; this can also consequently damage catalytic converter systems.

Some engine control systems decide not to fuel according the trapped air, but limiting the scavenging effect to minimize converter temperature. This is not ideal.

It is an object of the invention to provide an estimate of the flushed air. It is a further object to provide improved engine management system control based on the estimate of flushed/scavenged air. This provides more accurate torque estimation, fueling control, fueling closed loop control and such like.

**Statement of the Invention**

In one aspect is provided In an engine system, a method of determining the value of the air fuel ratio in an engine cylinder AFR$_{Combustion\ Chamber}$ when under scavenging conditions comprising; a) measuring or estimating the engine speed; b) measuring or estimating the inlet pressure; c) determining a value for the Air Trapped Ratio based on the results of steps a) and b); d) determining the air/fuel ratio at a location downstream of the cylinder/in the exhaust (AFRex); d) determining AFR$_{Combustion\ Chamber}$ = Air trapped Ratio * AFRex

The engine system may include a turbocharger.

The air/fuel ratio in the exhaust is determined by a Wide Range Air Fuel (WRAF), oxygen or λ sensor.

Said Wide Range Air Fuel (WRAF) may be located in or downstream of the exhaust manifold or the exit of the turbine of said turbocharger.

The value of trapped air may be stored in a look-up table relating AFR$_{Combustion\ Chamber}$ to engine speed and inlet pressure.

In a second aspect is provided a method of controlling an engine under scavenging conditions comprising determining the value of the air fuel ratio in an engine cylinder AFR$_{Combustion\ Chamber}$ as above and using this parameter in the control of said engine.

In a further aspect is provided a method of determining the value of the trapped air under scavenging conditions in an engine, at varying running conditions comprising: a) varying the value of the air/fuel ratio and measuring the resultant torque; b) determining the value of the air/fuel ratio where there is no consequent increase in torque with increasing air/fuel ratio; c) determining the trapped air based on the value of AFRmax torque.

Step a) may comprise increasing the value of the air fuel ratio incrementally and measuring the resultant torque.

$$Trapped\ Air\ may\ be\ = \frac{AFR_{\max\_torque\_\min\_fuel}\ @\ sensor}{\lambda * AFR_{Stoich.}}$$

$\lambda$ is preferably approximately 0.95.

**Brief Description of Drawings**

The invention will now be described by example and with reference to the following drawings of which:

Figure 1 shows how trapped air is related to torque, air control and air estimation;
Figure 2 shows an air chart showing the how air in the engine can be categorized;
Figure 3 shows a diagrammatic view of a turbocharged engine system;
Figure 4 illustrates "scavenging rich" conditions of the engine system of figure 3;
Figure 5 shows calibration technique illustrating how a table of

**Description of Invention**

A direct injection gasoline engine offers the possibility to scavenge air to improve the torque at low engine speed, either for absolute torque or turbine response (or both). During scavenging, air fuel ratio measured in the exhaust is not the same as in the combustion chamber. As a result, the WRAF sensor does not provide accurate feedback of the air/fuel ratio actually in the combustion chamber. As a consequence of this inaccurate feedback, the load estimation and the fueling control are not correctly calculated for the scavenging effect; aspects of the invention solve the two issues concerning load detection and fueling control.

In aspects of the invention the methodology provides for the determination of scavenged air that is fresh air flushed through the cylinder when both the inlet and exhaust valves are open in the inlet phase. Without scavenging, the air that goes in a cylinder stays in the cylinder and the air determination is based solely on air flow determination in the inlet path. With scavenging, a part of the fresh air that enters in the cylinders is flushed out, and only the portion that remains (or is trapped) in the cylinder should be considered for load determination and fueling (measurement and control).

In one aspect, the invention effectively determines the amount air trapped in the cylinder, and uses this to adjust and fix torque and fueling discrepancies. It should be noted that the air flow into the cylinder minus the fresh air flow out during scavenging provides a measure for the trapped air.

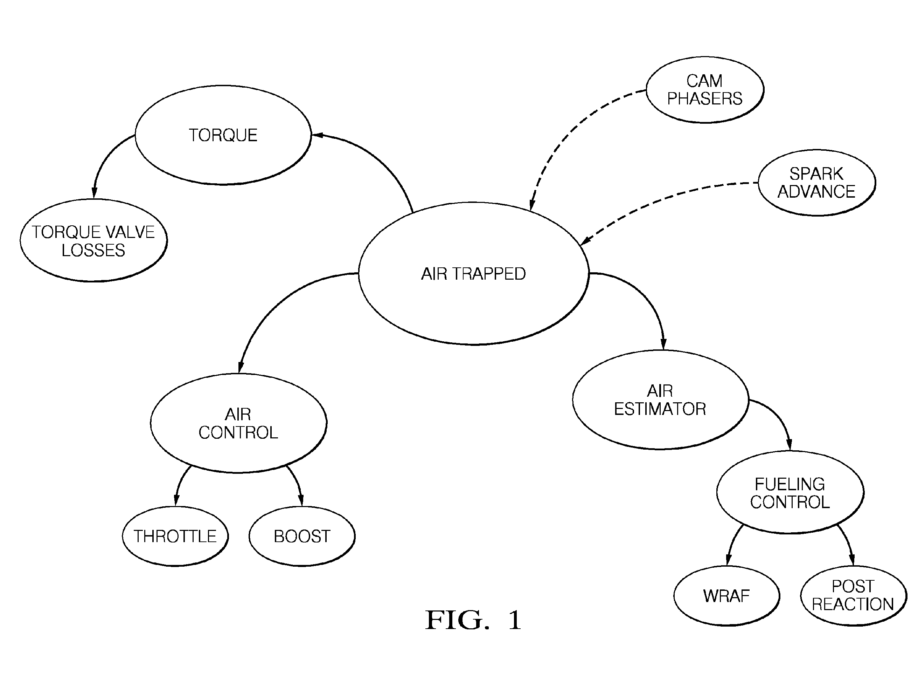

Figure 1 shows how air trapped is influenced by actuator positioning (mainly cam phasers and spark advance). The amount of trapped air needs according to one aspect is predicted to compensate the amount of fresh air that is flushed out. The figure shows how trapped air affects torque, air control and air estimation.

In prior art systems that use scavenging, the control of the engine by the ECU generally uses the parameter of inlet air to the cylinders (e.g. based on a classic speed density air determination).

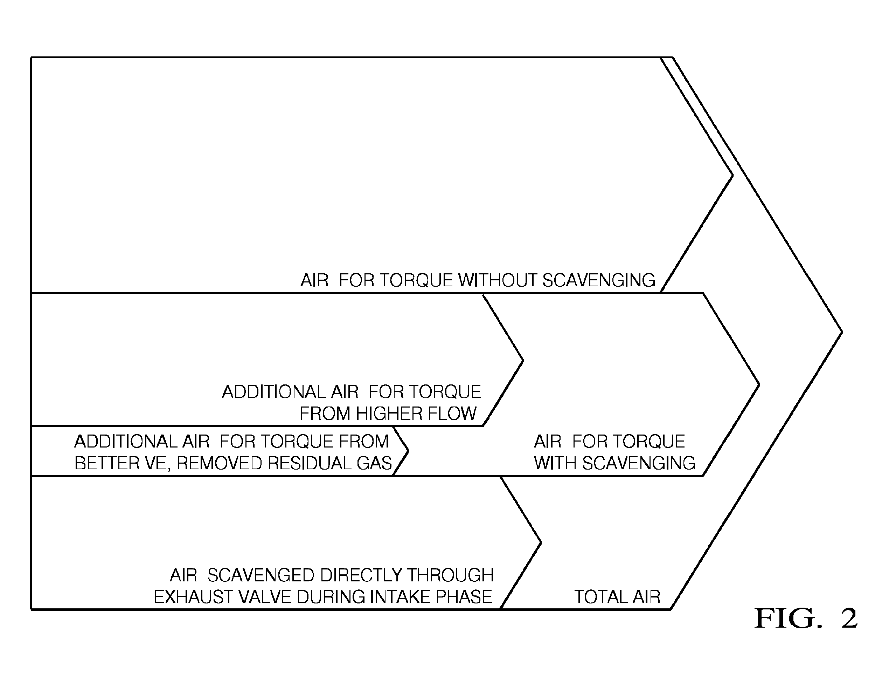

Figure 2 shows an air chart showing the how air is sub-divided. The total air (available for combustion) is the air inflow which is the air inflow (for torque) without scavenging air plus the air (for torque) with scavenging. However the torque estimation in prior art systems is inaccurate because the amount of air that provides torque is over-estimated.

In one aspect in an example amount of scavenged air is estimated and used to provide more accurate control e.g. by providing a better estimate of the trapped air (i.e. air in the cylinder) which is available for combustion and thus to produce torque. According to aspects, the invention provides a method to determine more accurately the actual combustion chamber air/fuel ratio by estimating differences between the air/fuel ratio in the cylinder and the air/fuel ratio at the exhaust (e.g. as determined by the downstream WRAF sensor).

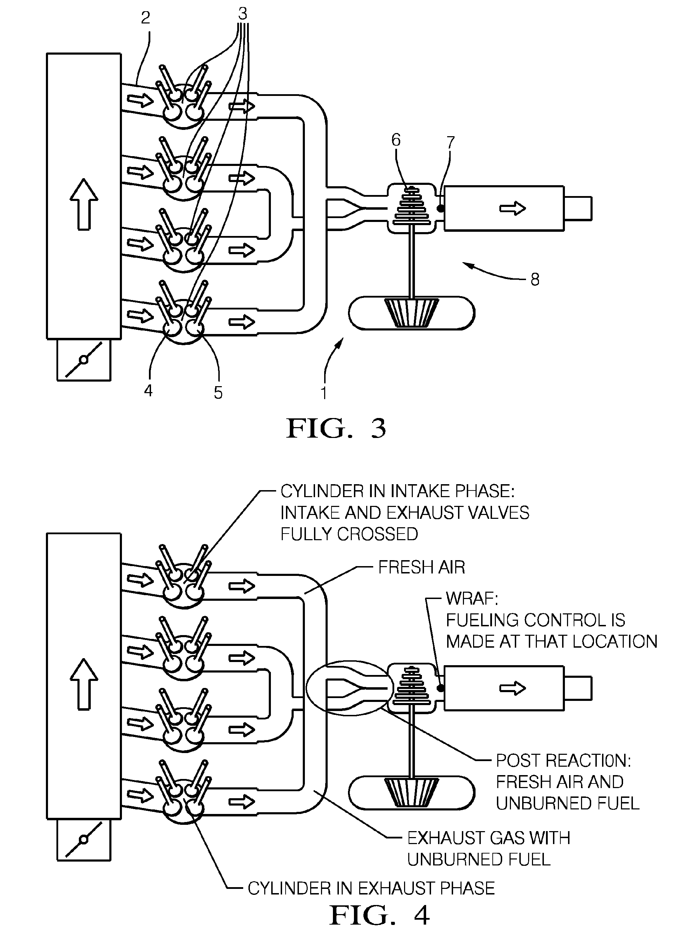

Figure 3 shows a diagrammatic view of a turbocharged engine system 1 and includes an inlet manifold 2 providing air inlet to a plurality of cylinders 3 (in the example there are four). Inlet 4 and outlet valves 5 are provided as shows. Fuel is injected into the cylinders and combusted with the air and the expanding gases are used to drive the pistons providing torque. The gases also drive a turbine 6 in turbocharged system and hence the turbo of the turbocharger 8, before entering the exhaust system which may include one of more catalytic units or systems. Typically a WRAF 7 sensor is located at or downstream of the exhaust manifold at the exit of the turbine provides a value for the air fuel mixture at this point. During scavenging, the prior art estimation of the air fuel ratio using a wide range air fuel ratio sensor (WRAF) cannot be used accuratley. WRAF sensor location AFR and combustion chamber AFR differs by the amount of air trapped.

During a scavenging sequence, two steps of scavenging are defined; called "scavenging rich" and "scavenging lean".

Scavenging rich is illustrated in figure 4. By determining the AFR with the $AFR_{WRAF\ sensor}$, the mixture in the cylinder is richer than expected, as scavenged air has been introduced to the exhaust. The excess of fuel corresponds is correlated to the amount of air flushed during the intake phase. When the unburned fuel meets the flushed fresh air coming from the cylinder which is in the intake stroke, a reaction occurs, called post reaction, contributing to the increase of enthalpy bring to the turbine, and then accelerating it faster.

In "scavenging lean" operation, by controlling the AFR with the $AFR_{Combustion\ Chamber}$, the mixture in the cylinder is exactly the expected one (most of time stoichiometric). The consequence is a higher engine flow, using the compressor on a more efficient point, allowing increasing the boosted pressure and the maximum torque.

Detailed Description

The air trapped in the cylinder is usually expressed as a ratio:

$$\text{Air trapped Ratio} = \frac{\text{Mass of Air trapped in the cylinder}}{\text{Total intake mass of air}}$$

The Air Fuel Ratio (AFR) relation at the WRAF sensor location and the combustion chamber is given by

$$\text{AFR}_{\text{Combustion Chamber}} = \text{Air trapped Ratio} * \text{AFR}_{\text{WRAF sensor}}$$

In a simple example of the invention a method is provided in which the air trapped ratio is taken to account in the control of the engine. In an example, the air trapped ratio is found using a look-up table (e.g. stored in the ECU) where the air trapped ratio is determined dependent on engine speed and inlet pressure. If the air trapped (ratio) is taken into account, then the AFR in the combustion chamber can be more accurately determined.

The look-up table may thus be a 2-dimensional table with X axis= engine speed and Y axis is intake manifold pressure/Barometric pressure, and that it provides, under scavenging, the amount of trapped air. To provide the table, prior calibration can be performed.

Calibration to provide the look-up MAP/table

The following method provides a sequence to determine the air trapped during scavenging. The determination can be made on a dynamometer or in a car, installed in a Vehicle Emission Laboratory (VEL). In examples, a torque or force measurement system can be utilized.

For a given point (speed/load) under scavenging condition (in the scavenging area), an Air Fuel Ratio (AFR) sweep is performed where the air fuel ratio is increased incrementally. The resultant torque is measured. Where the torque generally reaches a maximum value, then the value of AFR for that value is recorded and the trapped air is determined as at the sensor is made:

$$Trapped\ Air = \frac{AFR_{\max\_torque\_\min\_fuel}\ @\ sensor}{0.95 * AFR_{Stoich.}}$$

Preferably, to avoid any damage on the converter, it is highly recommended to start from the lean side. The starting AFR value needs to be lean enough to be sure that the lean value measured by the sensor also corresponds to a lean value in the combustion chamber.

Example 1

In step 1, the engine is run with a lean AFR.

In step 2, the AFR is increased by 0.1. AFR can be increased by increasing trapped air, moving to richer scavenging.

In step 3, the torque (or force at the wheels) is measured.

In step 4, if the torque has increased, then step 2 is repeated. If the torque stays the same or drops, then AFR value of the previous value before incrementing (AFR$_{\max\_torque-min-fuel}$ @ sensor) is noted.

In step 5 the amount of trapped air is

$$Trapped\ Air = \frac{AFR_{\max\_torque\_\min\_fuel} @\ sensor}{0.95 * AFR_{Stoich.}}$$

The factor 0.95 is applied because max torque is obtained for a $\lambda \sim 0.95$.

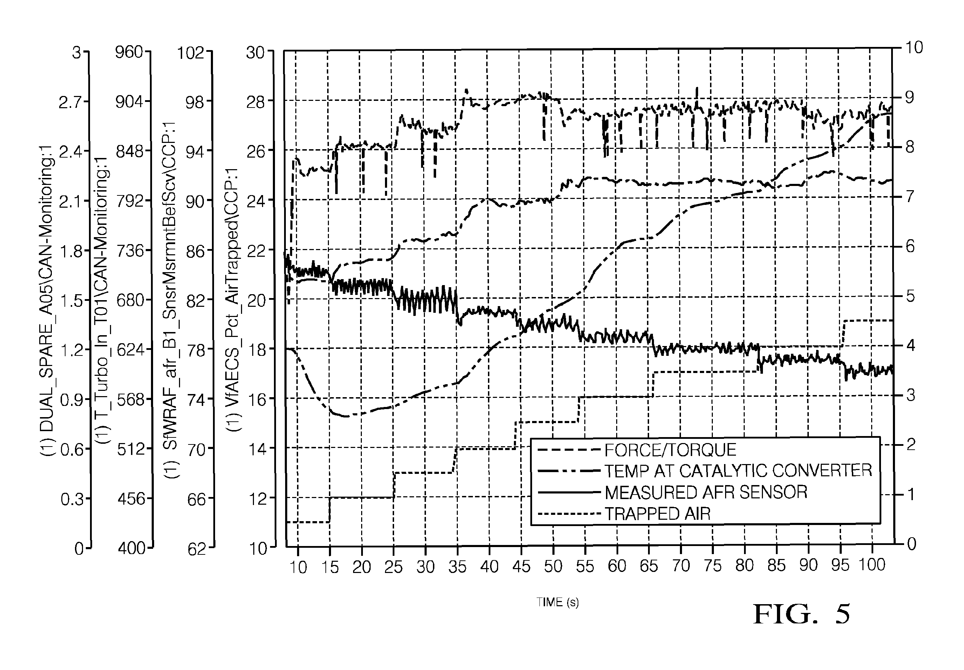

Figure 5 shows a plot of this technique and shows how various parameters change consequent to increasing incrementally the air/fuel ratio. As can be seen from the top trace, maximum torque is achieved at a point line A. The AFR can be measured by the WRAF sensor in the exhaust.

The advantage of the presented techniques is that it allows the estimation of air trapped, and this used in engine control. Using the fact that the maximum torque is obtained for $\lambda \sim 0.95$, the amount of trapped air is easily determined by AFR sweeps. Otherwise, a simulation off-line can be performed, using a geometrical model of the cylinder, valves and air ducts. According to aspects of the invention, a method is provided for sequential control of AFR, allowing post reaction ("scavenging rich") during transients and steady state scavenging ("scavenging lean")

**Claims**

1. In an engine system, a method of determining the value of the air fuel ratio in an engine cylinder $AFR_{Combustion\ Chamber}$ when under scavenging conditions comprising;

   a) measuring or estimating the engine speed;
   b) measuring or estimating the inlet pressure;
   c) determining a value for the Air Trapped Ratio based on the results of steps a) and b);
   d) determining the air/fuel ratio at a location downstream of the cylinder/in the exhaust (AFRex);
   d) determining $AFR_{Combustion\ Chamber}$ = Air trapped Ratio * AFRex

2. A method as claimed in claim 1 wherein the engine system includes a turbocharger.

3. A method as claimed in claim 1 or 2 wherein the air/fuel ratio in the exhaust is determined by a Wide Range Air Fuel (WRAF), oxygen or $\lambda$ sensor.

4. A method as claimed in claim 3 wherein said Wide Range Air Fuel (WRAF) is located in or downstream of the exhaust manifold or the exit of the turbine of said turbocharger.

5. A method as claimed in claim 1 where the value of trapped air is stored in a look-up table relating $AFR_{Combustion\ Chamber}$ to engine speed and inlet pressure.

6. A method of controlling an engine under scavenging conditions comprising determining the value of the air fuel ratio in an engine cylinder $AFR_{Combustion\ Chamber}$ as claimed in claims 1 to 5 and using this parameter in the control of said engine.

7. A method of determining the value of the trapped air under scavenging conditions in an engine, at varying running conditions comprising:

   a) varying the value of the air/fuel ratio and measuring the resultant torque;
   b) determining the value of the air/fuel ratio where there is no consequent increase in torque with increasing air/fuel ratio;
   c) determining the trapped air based on the value of AFRmax torque.

8. A method as claimed in claim 7 wherein step a) comprises increasing the value of the air fuel ratio incrementally and measuring the resultant torque.

9. A method as claimed in claim 8 where

$$Trapped\ Air = \frac{AFR_{\max\_torque\_\min\_fuel}\ @\ sensor}{\lambda * AFR_{Stoich.}}$$

**10.** A method as claimed in claim 9 where $\lambda$ is approximately 0.95.

**11.** A method as claimed in claim 5 wherein the values of trapped air are determined form the method of claims 7 to 10.

FIG. 1

FIG. 2

**FIG. 3**

CYLINDER IN INTAKE PHASE:
INTAKE AND EXHAUST VALVES
FULLY CROSSED

FRESH AIR

WRAF:
FUELING CONTROL IS
MADE AT THAT LOCATION

POST REACTION:
FRESH AIR AND
UNBURNED FUEL

EXHAUST GAS WITH
UNBURNED FUEL

CYLINDER IN EXHAUST PHASE

**FIG. 4**

FIG. 5

Europäisches
Patentamt

European
Patent Office

Office européen
des brevets

# EUROPEAN SEARCH REPORT

**Application Number**

EP 14 19 1584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/278196 A1 (BEER JOHANNES [DE] ET AL) 14 December 2006 (2006-12-14)<br>* abstract *<br>* paragraph [0022] - paragraph [0024] *<br>* paragraph [0029] - paragraph [0040] *<br>* paragraph [0046] *<br>* figure 1 * | 1-6,9-11 | INV.<br>F02D41/00<br>F02D41/30<br>F02D41/14<br>F02D41/38 |
| Y | WADE ET AL: "Chapter 7 - How it works: Modeling strategies",<br>1 August 2004 (2004-08-01), MOTORCYCLE FUEL INJECTION HANDBOOK, MOTORBOOKS INTERNATIONAL, US, PAGE(S) 71 - 78, XP008176179,<br>ISBN: 0-7603-1635-X<br>* left column;<br>page 74 * | 1-6,11 | |
| X | US 2009/070009 A1 (DELP MATTHIAS [DE]) 12 March 2009 (2009-03-12) | 7,8 | |
| Y | * paragraph [0002] *<br>* paragraph [0010] *<br>* paragraph [0019] *<br>* paragraph [0025] - paragraph [0028] * | 9,10 | TECHNICAL FIELDS SEARCHED (IPC)<br><br>F02D |
| A | HUBER E: "SAE Paper 710144; Measuring the Trapping Efficiency of Internal Combustion Engines Through Continuous Exhaust Gas Analysis",<br>SAE TECHNICAL PAPER SERIES, SOCIETY OF AUTOMOTIVE ENGINEERS, WARRENDALE, PA, US,<br>vol. 710144, 11 January 1971 (1971-01-11),<br>pages 1-10, XP008176160,<br>ISSN: 0148-7191<br>* abstract *<br>* page 1 - page 7 * | 1-11 | |

-/--

The present search report has been drawn up for all claims

| Place of search | Date of completion of the search | Examiner |
|---|---|---|
| The Hague | 8 May 2015 | Kämper, Fabian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 717 130 A (XU Y RON [US] ET AL) 10 February 1998 (1998-02-10) * column 4, line 51 - column 5, line 10 * ----- | 1-11 | |

TECHNICAL FIELDS
SEARCHED    (IPC)

The present search report has been drawn up for all claims

| Place of search | Date of completion of the search | Examiner |
|---|---|---|
| The Hague | 8 May 2015 | Kämper, Fabian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 14 19 1584

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2015

| Patent document cited in search report | | | Publication date | Patent family member(s) | | | Publication date |
|---|---|---|---|---|---|---|---|
| US 2006278196 | A1 | | 14-12-2006 | DE | 10256474 | B3 | 19-05-2004 |
| | | | | EP | 1567760 | A1 | 31-08-2005 |
| | | | | US | 2006278196 | A1 | 14-12-2006 |
| | | | | WO | 2004051067 | A1 | 17-06-2004 |
| US 2009070009 | A1 | | 12-03-2009 | DE | 102007043440 | B3 | 02-04-2009 |
| | | | | KR | 20090027593 | A | 17-03-2009 |
| | | | | US | 2009070009 | A1 | 12-03-2009 |
| US 5717130 | A | | 10-02-1998 | AU | 4085397 | A | 06-03-1998 |
| | | | | US | 5717130 | A | 10-02-1998 |
| | | | | WO | 9808071 | A2 | 26-02-1998 |

For more details about this annex : see Official Journal of the European Patent Office, No. 12/82